# EUROPÄISCHE PATENTANMELDUNG

(11) **EP 4 806 311 A1**
(43) Veröffentlichungstag der Anmeldung: **16.09.2026**
(21) Anmeldenummer: 26162267.4
(22) Anmeldetag: 04.03.2026
(51) Int. Cl.: A47J 31/46, A47J 31/36, A47J 31/52

(54) **VERFAHREN ZUM BETRIEB EINER GETRÄNKEZUBEREITUNGSVORRICHTUNG MIT OPTIMIERTEM ENERGIE- UND FLUIDVERBRAUCH**

(30) Priorität: 11.03.2025 DE 102025109262
(71) Anmelder: Eugster/Frismag AG, 8580 Amriswil (CH)
(72) Erfinder: Van de Löcht, Hendrik, 8580 Amriswil (CH); Riessbeck, Wolfgang, 8597 Landschlacht (CH); Scheurer, Roman, 8552 Felben-Wellhausen (CH)
(74) Vertreter: Patent- und Rechtsanwälte Behrmann Wagner PartG mbB

(57) **Zusammenfassung**

Verfahren zum Betrieb einer Getränkezubereitungsvorrichtung mit einem Fluidtank einem Fluidsystem, über welches Fluid aus dem Fluidtank zumindest einer, bevorzugt entnehmbaren, Brüheinheit der Getränkezubereitungsvorrichtung zuführbar ist, wobei die Brüheinheit wenigstens einen Hydraulikzylinder umfasst, der über das Fluidsystem mit dem Fluidtank verbunden ist umfassend die folgenden Verfahrensschritte:
- Aktivierung einer Fluidpumpe zur Überführung von Fluid aus dem Fluidtank über das Fluidsystem in die Brüheinheit zur Durchführung eines Betriebsprozesses, bevorzugt eines Brüh-, Spül- oder Reinigungsprozesses;
- wenigstens teilweises Füllen des wenigstens einen Hydraulikzylinders während des Betriebsprozesses mit Fluid;
- Überführen von einem Teil des Fluids aus dem Hydraulikzylinder in eine Brühkammer der Brüheinheit über ein Übergangsventil, bevorzugt unter gleichzeitiger Nachförderung von, besonders bevorzugt einem dem abfließenden Volumen gleichem Volumen, Fluid in den Hydraulikzylinder durch die Fluidpumpe.

## Beschreibung

Die vorliegende Erfindung betrifft ein Verfahren zum Betrieb einer Getränkezubereitungsvorrichtung, insbesondere eines Kaffee- und/oder Espressovollautomaten mit den Merkmalen des Oberbegriffs des Anspruchs 1.

Aus dem Stand der Technik sind bereits eine Vielzahl Getränkezubereitungsvorrichtungen, insbesondere Kaffeevollautomaten und/oder Espressovollautomaten bekannt. Bei derartigen Getränkezubereitungsvorrichtungen sind regelmäßig Brüheinheiten, bevorzugt entnehmbare Brüheinheiten, vorgesehen, mit denen oder in denen der tatsächliche Brüh- oder Auslaugvorgang stattfindet, der zur Herstellung eines Getränks führt. Das dabei verwendete Getränkesubstrat, bevorzugt Kaffeebohnenmehl, kann lose oder portioniert, insbesondere verkapselt, bereitgestellt werden.

Bei Getränkezubereitungsvorrichtungen, deren Brüheinheiten mit losem Getränkesubstratmehl, insbesondere Kaffeebohnenmehl ohne Verkapselung oder Portionsbehälter, arbeiten, sind ebenfalls bereits unterschiedliche Konzepte bekannt. Ein weit verbreitetes Konzept umfasst die Integration eines Fluidtanks, eines Getränkesubstratvorratsbehälters, einer Mahleinheit zum Zermahlen des Getränkesubstrats, einer Heizeinrichtung zur Erwärmung von Fluid, ein Fluidsystem, sowie eine Tresterschale und eine Tropfschale in die Getränkezubereitungsvorrichtung. Dadurch kann - im Wesentlich per Knopfdruck - aus dem Getränkesubstrat gemahlenes Getränkesubstratmehl hergestellt, dieses in die Brühkammer der Brüheinheit überführt, in der Brühkammer verdichtet, mit Fluid, bevorzugt erwärmtem Brühfluid, versetzt werden, wodurch ein Getränk hergestellt und ausgegeben wird. Anschließend kann die Brühkammer der Brüheinheit geöffnet und Restwasser in eine Restwasserschale dränagiert und das ausgelaugte Getränkesubstratmehl - auch als Trester bezeichnet - ausgestoßen oder ausgeworfen und in einer Tresterschale aufgefangen und zwischengelagert werden.

Für derartige Getränkezubereitungsvorrichtungen wurde in der Vergangenheit viel Entwicklungstätigkeit unternommen, um die Getränkequalität, die die Hygiene und die Getränkevielfalt zu erweitern oder zu verbessern. Wenig Augenmerk wurden Aspekten wie einem ressourcenschonenden Betrieb gewidmet. Mit zunehmender Ressourcenknappheit und einer entsprechenden Sensibilisierung der Benutzer und Bediener derartiger Getränkezubereitungsvorrichtungen rückt jedoch auch der Wunsch nach einem ressourcenschonenden Betrieb - möglichst ohne Einbußen hinsichtlich Bedienungskomfort, Dauer des Getränkebezug und Getränkequalität - stärker in den Fokus der Entwicklung.

Im Wesentlichen sind im Betrieb der Getränkezubereitungsvorrichtung neben dem eingesetzten Getränkesubstrat und Getränkesubstratmehl Fluid in Form von Wasser, und elektrischer Strom oder elektrische Energie die wesentlichen Verbrauchsmaterialien oder Verbrauchsgüter. Der elektrische Strom wird zum Antrieb elektromechanischer Komponenten, wie beispielsweise einem Antrieb, einer Mahleinheit und einer Fluidpumpe, der Brüheinheit, sowie für elektrothermische Einheiten, wie beispielsweise eine Heizeinrichtung weiterverwendet. Das Fluid, insbesondere Wasser, wird neben dem Brühvorgang auch für Spül- und Reinigungsprozesse, zum Vorwärmen von Komponenten und gegebenenfalls auch für hydraulische Komponenten der Getränkezubereitungsvorrichtung verwendet.

Es ist folglich die Aufgabe der vorliegenden Erfindung ein Verfahren zum Betrieb einer Getränkezubereitungsvorrichtung vorzuschlagen, welche die Nachteile im Stand der Technik überwindet, insbesondere Einsparungen bei den Verbrauchsmitteln während des Betriebs der Getränkezubereitungsvorrichtung erlaubt und damit einen ressourcenschonenden Betrieb ermöglicht.

Gelöst wird dieses Problem durch ein Verfahren zum Betrieb einer Getränkezubereitungsvorrichtung mit den Merkmalen des Anspruchs 1.

Vorteilhafte Ausführungsformen sind Gegenstand der nachfolgenden Beschreibung, der Figuren, der Figurenbeschreibung sowie der Unteransprüche.

Alle nachfolgend verfahrensmäßig offenbarten Merkmale sollen auch als entsprechend vorrichtungsmäßig offenbart gelten und beanspruchbar sein, sowie umgekehrt.

Das Verfahren zum Betrieb einer Getränkezubereitungsvorrichtung, insbesondere eines Kaffee- und/oder Espressovollautomaten, mit einem Fluidtank, einem Fluidsystem, über welches Fluid, bevorzugt Wasser, aus dem Fluidtank zumindest einer, bevorzugt entnehmbaren, Brüheinheit der Getränkezubereitungsvorrichtung zuführbar ist. Die Brüheinheit weist wenigstens einen Hydraulikzylinder auf, der über das Fluidsystem mit dem Fluidtank verbunden ist. Im Sinne der vorliegenden Erfindung sieht das Verfahren die folgenden Verfahrensschritte vor:
Aktivierung einer Fluidpumpe zur Überführung von Fluid aus dem Fluidtank über das Fluidsystem in die Brüheinheit zur Durchführung eines Betriebsprozesses, bevorzugt eines Brüh-, Spül- oder Reinigungsprozesses.

Teilweises Füllen des wenigstens einen Hydraulikzylinders während des Betriebsprozesses mit Fluid.

Überführen von einem Teil des Fluids aus dem Hydraulikzylinder in eine Brühkammer der Brüheinheit über ein Übergangsventil, bevorzugt unter gleichzeitiger Nachförderung von, besonders bevorzugt einem dem abfließenden gleichen Volumen, Fluid in den Hydraulikzylinder durch die Fluidpumpe.

Erfindungsgemäß ist dabei vorgesehen, dass zum Abschluss des Betriebsprozesses Fluid, welches das Übergangsventil nicht passiert hat, insbesondere Fluid aus dem Hydraulikzylinder, besonders bevorzugt jedweder Fluid, welches das Übergangsventil nicht passiert hat, in den Fluidtank zurückgefördert wird oder in Richtung des Fluidtanks zurückgefördert wird und jedweder Fluid, welches das Übergangsventil passiert hat nicht in den Fluidtank oder in Richtung des Fluidtanks zurückgefördert wird.

Das erfindungsgemäße Betriebsverfahren erreicht dadurch gleich mehrere Vorteile. Einerseits hat es sich als besonders effizient herausgestellt, wenn Teile der notwendigen Bewegungen der Brüheinheit, insbesondere solche Bewegungsabläufe und Zustände die höhere Drück erzeugen oder als Gegendruck für höhere Drücke eingesetzt werden, nicht elektromechanisch, sondern hydraulisch vorgenommen durchgeführt oder hergestellt werden. Bereits dadurch kann ein merklicher Teil an elektrischer Energie eingespart werden. Durch den verstärkten Einsatz von Hydraulik und Hydraulikkomponenten steigt jedoch auch der Bedarf an Fluid, insbesondere Wasser, welches als Hydraulikfluid in entsprechenden Hydraulikkomponenten, wie etwa den vorangehend genannten Hydraulikzylinder verwendet werden. In dieser Hinsicht ist es eine wesentliche Erkenntnis der Erfindung, dass es bei einer entsprechend klaren und eindeutigen Trennung zwischen einem hygienisch bedenklichen und hygienisch unbedenklichen Teil der Brüheinheit möglich ist, dass auch Fluid, welches den Fluidtank bereits verlassen hat und sogar bis in die Brüheinheit gefördert oder gepumpt wurde, insbesondere bis in den Hydraulikzylinder der Brüheinheit gepumpt wurde, ohne Bedenken hinsichtlich Belastung oder Verunreinigung in den Fluidtank zurückgefördert werden kann und damit der Gesamtheit der Getränkezubereitungsvorrichtung weiter zur Verfügung steht, insbesondere ohne dass ein weiteres Behältnis, wie beispielsweise eine weitere oder alternative Abwasserschale, bereitgestellt werden muss. Ein weiterer erheblicher Vorteil besteht darin, dass durch diese Art der Wiederverwertung oder Rückführung von Fluid, bevorzugt Wasser, ein sehr einfaches Fluidsystem, insbesondere ohne zu viel Verzweigungen, realisiert werden kann. Eine weitere, besonders vorteilhafte Wirkung der Erfindung besteht darin, dass bei einer anspruchsgemäßen Fluidführung, bei der zum Brühen ein Teil des Fluids aus dem Hydraulikzylinder in die Brühkammer der Brüheinheit überführt wird eine Fluiderwärmung vorteilhafterweise vor dem Hydraulikzylinder stattfindet oder die entsprechende Heizeinrichtung der Hydraulikeinrichtung entlang des Fluidsystems vorgeschaltet angeordnet ist. Wie unten noch näher erläutert, ermöglicht damit die Rückführung von Fluid, welches im Hydraulikzylinder zurückbleibt oder zurückgeblieben ist auch die Möglichkeit thermische Energie, zumindest zum Teil zu konservieren, in dem das erwärmte Fluid, welches das Übergangsventil nicht passiert hat, in den Fluidtank oder in Richtung des Fluidtanks zurückgefördert wird.

Es ist auch ein besonders vorteilhafter Aspekt der Erfindung, dass kein Restwasser oder Restfluid in der Brüheinheit verbleibt. Fluid, welches in die Brüheinheit gelangt, wird entweder in Richtung des Fluidtanks zurück gefördert oder wird über einen Getränkeauslauf oder eine Tropfschale abgeleitet oder aufgenommen.

Das im Verfahren eingesetzte Fluidsystem verbindet wenigstens Fluidtank und Brüheinheit. Das Fluidsystem kann jedoch auch weitere Verbraucher von Fluid versorgen und dazu eine fluidleitende Verbindung umfassen oder herstellen. Beispielsweise kann das Fluidsystem ein Milchmodul und/oder einen Heißwasserauslass anbinden oder einbinden. Die Brüheinheit kann bevorzugt entnehmbar ausgestaltet sein. Alternativ können aber auch Brüheinheiten zum Einsatz kommen, welche, zumindest durch einen Benutzer, nicht aus der Getränkezubereitungsvorrichtung entnommen werden können. Der Hydraulikzylinder kann beispielsweise so mit der Brüheinheit, insbesondere mit der Brühkammer zusammenwirkend ausgebildet sein, dass ein Befüllen des Hydraulikzylinders mit Fluid zu einer Verstellung eines Brühkammerbodens gegenüber einer Brühkammerwand dient. Dadurch kann der Hydraulikzylinder besonders vorteilhaft ein hydraulisches Tampern des losen Getränkesubstratmehls bewirken und auch während des Brühens die Gegendrücke zum Innendruck im Inneren der verschlossenen Brühkammer bereitstellen. Gegebenenfalls kann der Hydraulikzylinder auch vorteilhaft so ausgebildet sein, dass die Verstellung des Brühkammerbodens bis zu einem oberen Rand der Brühkammerwand, bevorzugt rein hydraulisch, möglich ist, sodass auch eine Auswerferposition des Brühkammerbodens und der Brühkammer, in der der Trester abgestreift oder ausgestoßen wird im Wesentlichen durch die Verstellung des Brühkammerbodens aufgrund eines hydraulischen Antriebs oder Verstellen des Hydraulikzylinders erreicht wird.

Die Fluidpumpe kann als grundsätzlich bekannte, für Getränkezubereitungsvorrichtungen geeignete Fluidpumpe ausgebildet sein. Besonders bevorzugt ist die Fluidpumpe so ausgebildet, dass Fluid unter entsprechenden Drücken gefördert werden können, die zum Brühen und dementsprechend auch als Gegendruck im Hydraulikzylinder notwendig sind oder notwendig sein können. Das Übergangsventil kann besonders vorteilhaft als Gegendruckventil ausgebildet sein. Die Realisierung als Gegendruckventil hat verschiedene Vorteile. Einerseits kann dadurch rein über die mechanischen Komponenten des Übergangsventils oder Gegendruckventils der hydrostatische oder hydrodynamische Druck eingestellt werden, bei dem das Gegendruckventil als Übergangsventil öffnet und den Übergang, Übertritt oder Durchfluss von Fluid aus dem Hydraulikzylinder in die Brühkammer ermöglicht. Gleichzeitig wird sichergestellt, dass ausschließlich ein Fluidfluss in eine Richtung, nämlich vom Hydraulikzylinder in die Brühkammer, ermöglicht wird und ein Fluidfluss in umgekehrter Richtung auf jeden Fall unterbunden wird. Somit wird auch sichergestellt, dass das Fluid, welches aus dem Fluidtank entnommen oder gepumpt wurde und bis in den Hydraulikzylinder der Brüheinheit gelangt ist oder gefördert wurde in keinem der Betriebsprozesse, weder in einem Brühprozess noch in einem Spül- oder Reinigungsprozess mit dem Inneren der Brühkammer in Kontakt gekommen ist.

Denn durch die vorteilhafte Ausführung des Übergangsventils als Gegendruckventil wird das Übergangsventil geschlossen, sobald der Überdruck oder Druck im Inneren des Hydraulikzylinders einen vorbestimmten Wert unterschreitet. In diesem Fall stoppt jeglicher Fluidfluss, ohne die Möglichkeit, dass Fluid von der Brühkammer zurück in den Hydraulikzylinder fließt.

Je nach Betriebsprozess können unterschiedliche Vorgehensweisen zum Rückführen von Fluid, welches das Übergangsventil nicht passiert hat vorteilhaft sein. Es kann beispielsweise vorteilhaft sein, möglichst alles Fluid aus dem Hydraulikzylinder zu verdrängen und - gegebenenfalls bis auf das Volumen des Leitungspfads des Fluidsystems zwischen Fluidtank und Hydraulikzylinder - zurück in den Fluidtank zu überführen. Dadurch kann beispielsweise erreicht werden, dass ein Maximum an thermischer Energie oder Wärmeenergie konserviert wird.

Es kann, bevorzugt in Situationen, in dem auf einen Brühprozess innerhalb kurzer oder kürzester Zeit ein weiterer Brühprozess erwartet werden kann, auch vorteilhaft sein, Fluid aus dem Hydraulikzylinder nur zu einem Teil in den Fluidtank zurückzuführen. Wenn in einem darauffolgenden Brühprozess dann eine besonders große Menge von Getränkesubstratmehl angefordert wird und verwendet werden soll, kann beispielsweise zum Absenken des Brühkammerbodens und zur Vergrößerung der Brühkammer ein Rest von Fluid in dem Hydraulikzylinder noch entleert werden. Wenn hingegen nur ein Brühprozess mit verhältnismäßig wenig Getränkesubstratmehl durchgeführt werden soll, kann das Restfluid in dem Hydraulikzylinder verbleiben, sodass dann beim nachfolgenden Brühprozess insgesamt weniger Volumen von Fluid gepumpt werden muss, gleichzeitig aber sichergestellt werden kann, dass das Restfluid im Hydraulikzylinder, welches dann gemischt mit neu nachgefordertem Fluid das Übergangsventil überqueren und in die Brühkammer eintreten kann, ausreichend heiß oder warm ist, um eine gewünschte Getränketemperatur erreichen zu können.

Mit anderen Worten ausgedrückt kann vorgesehen sein, dass zum Abschluss des Betriebsprozesses Fluid aus dem Hydraulikzylinder abhängig von der nachfolgenden Bedienung der Getränkezubereitungsvorrichtung in mehreren Teilvolumina zurückgeführt wird. Wenn auf einen Betriebsprozess, beispielweise ein Brühprozess anschließend unmittelbar oder innerhalb kurzer Zeit ein nachfolgender Brühprozess durchgeführt wird, kann lediglich ein erstes Teilvolumen von Fluid zurückgeführt werden. Wenn kein unmittelbar anschließender oder kurzfristiger anschließender Betriebsprozess durchgeführt wird, kann - gegebenenfalls nach einem festen Zeitintervall - nach das ersten Teilvolumen rückgeführt wurde auch ein zweites Teilvolumen, bevorzugt zum vollständigen Entleerung des Hydraulikzylinders, zurücküberführt werden.

In einer besonders vorteilhaften Ausgestaltung des Verfahrens kann vorgesehen sein, dass bei der Überführung von Fluid aus dem Fluidtank über das Fluidsystem in die Brüheinheit das Fluid eine, bevorzugt aktivierte, Heizeinrichtung der Getränkezubereitungsvorrichtung durchströmt. Wie oben bereits angedeutet, kann dies vorteilhaft stattfinden, wenn als Betriebsprozess ein Brühprozess durchgeführt wird, der ein Heißgetränk erzeugen und ausgeben soll. In diesem Fall wird regelmäßig Fluid aus dem Fluidtank entnommen, bei Durchströmen der Heizeinrichtung, die beispielsweise als Thermoblock ausgebildet sein kann, erwärmt und dann in die Brüheinheit und damit in den Hydraulikzylinder und gegebenenfalls aus dem Hydraulikzylinder in die Brühkammer eingeleitet. In einer alternativen Ausführungsform kann auch vorteilhaft vorgesehen sein, dass bei der Überführung von Fluid aus dem Fluidtank zu anderen Komponenten der Getränkezubereitungsvorrichtung, welche heißes Fluid oder sogar Fluiddampf benötigen, wie etwa ein Milchmodul, das Fluid eine, bevorzugt aktivierte, Heizeinrichtung durchströmt.

In einer besonders vorteilhaften Weiterbildung kann vorgesehen sein, dass bei der Rückführung des Fluids, welches das Übergangsventil nicht passiert hat, dass Fluid, insbesondere nochmals und/oder in umgekehrter Richtung, durch die deaktivierte Heizreinrichtung strömt, wobei Restwärme der deaktivierten Heizeinrichtung auf das Fluid übertragen wird. Mit anderen Worten ausgedrückt kann es besonders sinnvoll sein, um thermische Energie effizient zu nutzen, dass Fluid, welches von der Brüheinheit, insbesondere von dem Hydraulikzylinder, in den Fluidtank zurückgeführt wird in umgekehrter Richtung durch eine deaktivierte Heizeinrichtung gefördert wird, die aufgrund einer vorangegangenen Aktivierung jedoch noch in der Lage ist Restwärme auf das zurückgeförderte Fluid zu übertragen. Dies kann besonders sinnvoll sein, wenn vor dem Rückführen des Fluids ein Betriebsprozess durchgeführt wurde, der neben Fluid in der Brüheinheit auch Fluid oder Fluiddampf benötigte, beispielsweise zum Aufschäumen von Milch oder einem vergleichbaren, eiweißhaltigen Produkt. In gattungsgemäßen Getränkezubereitungsvorrichtungen wird regelmäßig im Anschluss an einen solchen Betriebsprozess die Heizeinrichtung aktiv gekühlt, um ein Überhitzen nach dem Betrieb zu vermeiden. Die Erfindung hat auch erkannt, dass besonders vorteilhaft ein Kühlen der Heizeinrichtung auch dadurch erreicht werden kann, dass das Fluid, welches das Übergangsventil nicht passiert hat und zum Abschluss des Betriebsprozesses zurück in Richtung Fluidtank gefördert wird, die Heizeinrichtung, bevorzugt erneut, durchquert und dabei erwärmt oder weitererwärmt wird und somit ebenfalls zur Kühlung der Heizeinrichtung beitragen kann. Die vom Fluid aufgenommene Wärme kann besonders vorteilhaft zusammen mit dem Fluid in den Fluidtank überführt und dort zumindest teilweise und zeitweise konserviert werden.

In einer weiteren, besonders vorteilhaften Ausgestaltung des Verfahrens kann vorgesehen sein, dass bei der Überführung von Fluid aus dem Fluidtank über das Fluidsystem in die Brüheinheit das Fluid eine Heizeinrichtung durchströmt, wobei die Steuerung der Heizeinrichtung mittels einer Steuereinheit der Getränkezubereitungsvorrichtung auf der Basis einer gespeicherten Betriebsprozesshistorie angepasst wird. Gattungsgemäße Getränkezubereitungsvorrichtungen kommen verbreitet in privaten Haushalten, im betrieblichen Umfeld, insbesondere im Büroumfeld, und gegebenenfalls auch in gastronomischen Einrichtungen zum Einsatz. In vielen dieser Einsatzsituationen existieren Stoßzeiten, in denen in verhältnismäßig kurzer Zeit verhältnismäßig viele Betriebsprozesse, insbesondere Brühprozesse, durchgeführt werden. In derartigen Situationen kann es dazu kommen, dass mit jeder Rückführung von Fluid nach einem Betriebsprozess, insbesondere Brühprozess, erwärmtes Fluid, insbesondere Wasser aus dem Hydraulikzylinder zurück in den Fluidtank überführt wird und dabei gegebenenfalls - wie vorangehend beschrieben - noch weitere Restwärme der Heizeinrichtung aufnimmt und diese in den Fluidtank einbringt. Dadurch kann sich in den besagten Stoßzeiten die Gesamttemperatur des Fluids in dem Fluidtank erhöhen. Dies führt im Umkehrschluss jedoch auch dazu, dass dann vorteilhaft für die Erwärmung von Fluid, welches dem Fluidtank entnommen wird und der Brüheinheit zugeführt wird, nur noch weniger Wärme oder thermische Energie zugeführt werden muss, um auf eine gewünschte oder vorgegebene Temperatur, beispielsweise Brühtemperatur, erwärmt zu werden. Durch die Speicherung der Betriebsprozesshistorie und den Zugriff auf die gespeicherte Betriebsprozesshistorie durch eine Steuereinheit kann somit der Energieverbrauch der Heizeinrichtung optimiert werden und gegebenenfalls sogar verhindert werden, dass Fluid in der Heizeinrichtung zu stark erwärmt wird. Als Steuereinheit kann beispielsweise eine zentrale Recheneinheit auf der Basis von integrierten Schaltkreisen zum Einsatz kommen. Die Betriebsprozesshistorie kann beispielsweise auf bekannten Speichermodulen auf Halbleiterbasis gespeichert werden.

Besonders bevorzugt ist, dass sowohl die Steuereinheit als auch der Speicher multifunktional ist und nicht nur zur Speicherung der Betriebsprozesshistorie und zur Steuerung der Heizeinrichtung, sondern darüber hinaus auch zur Speicherung von sonstigen Betriebsparametern und Benutzereinstellungen sowie zur Steuerung der sonstigen Komponenten der Getränkezubereitungsvorrichtung genutzt wird.

In einer weiteren, besonders vorteilhaften Ausprägung des Verfahrens kann vorgesehen sein, dass bei der Überführung von Fluid aus dem Fluidtank über das Fluidsystem in die Brüheinheit das Fluid eine Heizeinrichtung durchströmt, wobei die Steuerung der Heizeinrichtung mittels einer Steuereinheit der Getränkezubereitungsvorrichtung auf der Basis eines gemessenen oder approximierten Füllstands des Fluidtanks angepasst wird. Diese Ausführungsform berücksichtigt, dass neben der Betriebsprozesshistorie auch die Menge oder das Volumen an Fluid im Fluidtank mitentscheidend ist um zu berechnen oder zu erfassen, wie die Heizeinrichtung optimal anzusteuern ist, sodass einerseits gewünschte Fluidtemperaturen erreicht, gleichzeitig jedoch auch die Wärmemengen, die durch die Rückführung von Fluid in den Fluidtank konserviert oder gespeichert werden, bestmöglich berücksichtigt werden.

Weiterhin kann vorteilhaft vorgesehen sein, dass neben dem Füllstand auch die Temperatur des Fluids im Fluidtank gemessen wird. In diesem Fall, wenn eine tatsächlich Ist-Temperatur des Fluids im Fluidtank gemessen wird, kann gegebenenfalls auf den Rückgriff auf eine Betriebsprozesshistorie verzichtet werden. Dafür ist jedoch bei der tatsächlichen Messung einer Temperatur ein entsprechender Temperaturfühler oder eine Temperatursonde im Bereich des Fluidtanks notwendig.

Eine weitere, besonders vorteilhafte Ausgestaltung des Verfahrens kann zudem vorsehen, dass Fluid, welches das Übergangsventil nicht passiert hat durch eine elastische Rückstelleinrichtung des Hydraulikzylinders aus dem Hydraulikzylinder zurück in den Fluidtank oder zumindest in Richtung des Fluidtanks gefördert wird. Dies ermöglicht, dass zum Abschluss des Betriebsprozesses nicht nochmals eine Fluidpumpe aktiviert werden muss, um das Fluid, welches das Übergangsventil nicht passiert hat, zurückzufördern, sondern dass stattdessen eine mechanische, elastische Rückstelleinrichtung, beispielsweise in der Form von einer oder mehrerer Wendelfedern, den Hydraulikzylinder derart vorspannt oder kraftbeaufschlagt, dass beim Wegfall eines Pumpendrucks und gegebenenfalls einer zusätzlichen Belüftung oder Entspannung des Fluidsystems Fluid aus dem Hydraulikzylinder teilweise, weitestgehend oder sogar vollständig abgeführt und in Richtung des Fluidtanks verdrängt wird. Dies kann besonders vorteilhaft sein, weil bei einer derartigen Verfahrensführung die Fluidpumpe nicht zwangsläufig in der Lage sein muss Fluid in unterschiedliche Richtungen pumpen zu können.

Eine weitere, alternative Variante des Verfahrens kann vorteilhaft vorsehen, dass eine Verbindungsstelle des Fluidsystems am Übergang zwischen der, bevorzugt entnehmbaren, Brüheinheit und der restlichen Getränkezubereitungsvorrichtung dauerhaft in einem Kopplungszustand verbleibt und lediglich in einen Trennungszustand überführt wird, in dem das Fluidsystem zwischen Brüheinheit und restlicher Getränkezubereitungsvorrichtung unterbrochen ist, wenn die Brüheinheit aus der Getränkezubereitungsvorrichtung entnommen wird. Dies hat mehrere Vorteile. Zunächst ist bei der Rückführung von Fluid aus der Brüheinheit zurück in den Fluidtank oder zumindest zurück in Richtung des Fluidtanks besonders wichtig, dass die möglichen Situationen, in denen eine Kontaminierung des Fluids stattfinden könnte, vermieden oder weitestgehend minimiert werden. Bei gattungsgemäßen Getränkezubereitungsvorrichtungen ist mitunter vorgesehen, dass bei jedem Betriebsprozess, insbesondere bei jedem Brühprozess, eine Kopplung des Fluidsystems am Übergang zur Brüheinheit hergestellt und anschließend wieder getrennt wird. Gerade im getrennten Zustand ergibt sich jedoch die Möglichkeit, dass sich an den komplementären Verbindungsstellen Schmutzpartikel, Keime, Pilzsporen oder dergleichen anhaften und über die Zeit auch mit dem Fluid in Kontakt kommen können. Bei derartigen Ausgestaltungen könnten schlimmstenfalls Verunreinigungen mit dem Fluid aus der Brüheinheit zurück in Richtung Fluidtank mitgeführt werden und somit zu einer größeren Kontamination des Fluids führen. Wenn jedoch gemäß der vorliegenden Ausführungsform dafür gesorgt wird, dass lediglich im Fall einer Entnahme der Brüheinheit überhaupt die Kopplung zwischen den Bestandteilen des Fluidsystems aufgehoben oder unterbrochen wird, besteht auch nur ein absolut minimales Risiko, dass sich an den besagten Verbindungsstellen überhaupt Verschmutzungen oder Kontaminationen ausbilden oder anheften können.

In einer weiteren, besonders vorteilhaften Variante des Verfahrens kann vorgesehen sein, dass während der Betriebsprozesse eine Brühkammer der Brüheinheit mittels einer mechanischen Antriebseinheit in verschiedene Stellungen, wenigstens eine geöffnete Stellung und eine mit einem Brühkopf der Brüheinheit dichtende Verschlussstellung, überführt wird. Vorteilhaft kann die mechanische Antriebseinheit als sogenannte Kniehebelmechanik mit samt einem dazugehörigen, beispielsweise elektromotorischen, Antrieb ausgebildet sein, der die Brühkammer innerhalb der Brüheinheit verschwenkt und/oder linear verfährt. Die mechanische Antriebseinheit kann bevorzugt so ausgestaltet sein, dass die geöffnete Stellung und die Verschlussstellung im Wesentlichen kraftlos erfolgen. Das bedeutet, dass die mechanische Antriebseinheit gerade keine nennenswerten Drücke oder Kräfte aufbringt oder kompensiert, sondern dass die mechanische Antriebseinheit im Wesentlichen nur das Verfahren oder Bewegen der Brühkammer ermöglicht und die Erzeugung, Kompensation oder Ableitung von wesentlichen Kräften und Drücken während der Betriebsprozesse über hydraulische Komponenten, besonders bevorzugt wenigstens einen Hydraulikzylinder, erreicht wird. Dadurch kann ebenfalls eine besonders energieeffiziente Betriebsweise der Getränkezubereitungsvorrichtung erreicht werden, weil - wie oben bereits erwähnt, - die hydraulischen Komponenten besonders energieeffizient betrieben werden können und folglich nur minimale Energie, beispielsweise elektrische Energie, eingesetzt werden muss, um die mechanische Antriebseinheit zu versorgen oder zu betreiben.

In einer weiteren vorteilhaften Ausführungsform kann vorgesehen sein, dass das Fluid, welches in die Brüheinheit überführt wird, in der Brüheinheit in einem, bis zum Übergangsventil unverzweigten Fluidpfad gefördert und/oder zurück gefördert wird. Dies bedeutet mit anderen Worten ausgedrückt, dass der Fluidpfad innerhalb der Brüheinheit keine Totlöcher oder Sacklöcher aufweist oder als sogenannter Inline-Fluidpfad ausgebildet ist. Dadurch wird ermöglicht, dass kein oder kaum Restwasser in der Brüheinheit verbleibt und dass Fluid, welches das Übergangsventil nicht passiert hat einfach und vollständig aus der Brüheinheit zurück in Richtung des Fluidtanks zurück gefördert werden kann. Der unverzweigte Fluidpfad ermöglicht folglich eine einfache Lösung zur vollständigen oder fast vollständigen Entleerung der Brüheinheit. Hinter dem Übergangsventil kann eine Verzweigung vorliegen, die, wie nachfolgend beschrieben eine, in eine Tropfschale und in einen Getränkeauslass führen kann.

In einer zusätzlichen Variante des Verfahrens kann vorgesehen sein, dass das Fluid, welches das Übergangsventil passiert hat in einen Getränkeauslauf und/oder in eine Tropfschale abgeleitet wird. Durch die Rückführung von Fluid kann erreicht werden, dass die besagte Tropfschale klein ausfällt oder nur ein minimales Volumen in der Getränkezubereitungsvorrichtung einnimmt, da nur äußerst wenig Fluid überhaupt in die Tropfschale gelangt. Fluid, welches über einen Getränkeauslauf abgeführt wird, kann - sofern es nicht in ein dafür vorgesehenes Getränkegefäß eingeleitet wird - gegebenenfalls auch in der Tropfschale aufgefangen werden. Dadurch wird insgesamt sichergestellt, dass bei der Rückführung von Fluid in den Fluidtank oder in Richtung des Fluidtanks nur solches Fluid berücksichtigt wird, welches kein oder nur ein minimales Risiko auf Kontamination oder Verunreinigung aufweist, gleichzeitig aber gegebenenfalls sogar mit zusätzlicher Wärmeenergie versehen ist.

Nachfolgend wird die Erfindung anhand einer lediglich schematischen Darstellung erläutert. Darin zeigt:

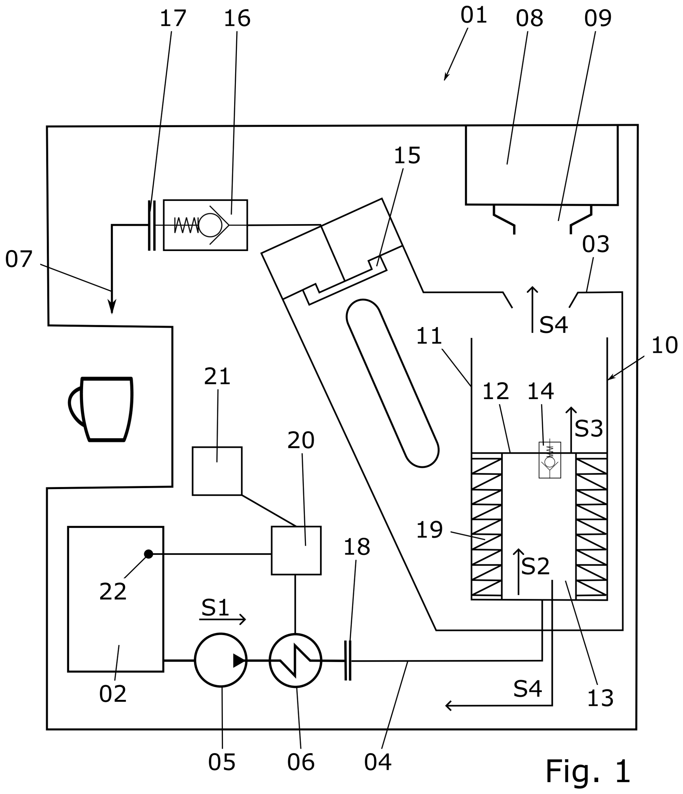

- Fig.1:: eine schematische Darstellung einer Getränkezubereitungsvorrichtung.

Fig. 1 zeigt eine Getränkezubereitungsvorrichtung 01 mit einem Fluidtank 02, einer, bevorzugt entnehmbaren Brüheinheit 03, einem Fluidsystem 04, welches sich von dem Fluidtank 02 über eine Fluidpumpe 05, eine Heizeinrichtung 06, die Brüheinheit 03 bis zu einem Getränkeauslauf 07 erstreckt. Im dargestellten Fluidsystem 04 kommt, soweit nicht anders erwähnt, Wasser oder Wasserdampf als Fluid zum Einsatz. Das Fluidsystem 04 in der Fig. 1 ist deutlich vereinfacht dargestellt. Anderen Komponenten, die gegebenenfalls notwendig sind, um ein Milchmodul mit Fluid oder Dampf zu versorgen oder um andere Funktionalitäten der Getränkezubereitungsvorrichtung zu ermöglichen, sind aus Gründen der Übersichtlichkeit nicht dargestellt.

Die Getränkezubereitungsvorrichtung kann zudem ein Getränkesubstratreservoir 08 und eine Mahleinheit 09 umfassen, die beide so positioniert sind, dass im Wesentlichen durch Schwerkrafteinwirkung Getränkesubstrat, beispielsweise Kaffeebohnen, aus dem Getränkesubstratreservoir 08 in die Mahleinheit 09 gelangen können, dort zu Getränkesubstratmehl zermahlen werden und in dieser Form an die Brüheinheit 03 abgegeben werden, wo das Getränkesubstratmehl in die Brühkammer 10 der Brüheinheit 03 eingefüllt wird. Ein beweglich gegenüber der Brühkammerwand 11 gelagerter Brühkammerboden 12 ist mit einem Hydraulikzylinder 13 wirkverbunden, wobei der Hydraulikzylinder 13 Teil des Fluidsystems 04 ist. Vom Hydraulikzylinder 13 in die Brühkammer 10 kann Fluid dadurch überführt werden, dass es das Übergangsventil 14 passiert.

Die Brühkammer 10 ist in der Darstellung der Fig. 1 in einer geöffneten Stellung dargestellt. Eine nicht im Detail dargestellte, bevorzugt mechanische Antriebseinheit der Getränkezubereitungsvorrichtung und/oder der Brüheinheit 03 ist dazu eingerichtet die Brühkammer 10 in eine mit dem Brühkopf 15 dichtende Stellung zu überführen. Dem Brühkopf 15 zugeordnet ist als Teil des Fluidsystems 04 ein Gegendruckventil 16 zugeordnet, welches auch als Cremaventil bezeichnet wird oder bekannt ist. Das Fluidsystem 04 umfasst Verbindungsstellen 17, 18 die als Fluidschnittstellen ausgebildet sind und die Trennung und Entnahme der Brüheinheit 03 ermöglichen.

Die Verfahrensschritte des erfindungsgemäßen Verfahrens werden nachfolgend anhand von Pfeilen innerhalb der Fig. 1 verdeutlicht, die den jeweiligen Verfahrensschritt anzeigen oder symbolisieren. In einem ersten Verfahrensschritt S1 erfolgt die Aktivierung der Fluidpumpe 05 zur Überführung von Fluid aus dem Fluidtank 02 über das Fluidsystem 04 in die Brüheinheit 03 zur Durchführung eines Betriebsprozesses, bevorzugt eines Brüh-, Spül- oder Reinigungsprozesses. In Folge des beschriebenen Verfahrensschrittes erfolgt in einem weiteren Verfahrensschritt S2 ein wenigstens teilweises Füllen des Hydraulikzylinders 13 mit Fluid. Bevorzugt werden die vorangehend beschriebenen Verfahrensschritte erst und nur ausgeführt, wenn sich die Brühkammer 10 in einer mit dem Brühkopf 15 dichtenden Stellung befinden. Diese kann erreicht werden, in dem die nicht im Detail dargestellte mechanische Antriebseinheit die Brühkammer 10 verschwenkt und/oder linear verfährt.

Das wenigstens teilweise Füllen des Hydraulikzylinders 13 mit Fluid kann vorteilhaft dazu führen, dass der Brühkammermoden 12 gegen die Vorspannung der elastischen Rückstelleinrichtung 19 gegenüber der Brühkammerwand 11 verschoben, insbesondere angehoben wird. Die Funktion kann sinnvoll sein, um Getränkesubstratmehl zu verdichten, einen Innendruck der verschlossenen Brühkammer 10 während des Brühens zu kompensieren, zum Abschluss eines Brühprozesses den Trester zu entfeuchten, das Brühkammervolumen zur Durchführung eines Spülprozesses zu minimieren oder dergleichen.

In einem weiteren Verfahrensschritt S3 findet die Überführung von einem Teil des Fluids aus dem Hydraulikzylinder 13 in die Brühkammer 10 statt, wobei ein Teil des Fluids aus dem Hydraulikzylinder 13 das Übergangsventil 14 passiert. Vorteilhaft kann dies geschehen, während weiterhin Fluid aus dem Fluidtank 02 entnommen und über die Fluidpumpe 05 nachgefördert wird, sodass die Füllung und der Druck im Hydraulikzylinder annähernd konstant bleiben. Besonders bevorzugt ist dabei das Übergangsventil 14 so ausgestaltet, dass es einen Fluidübergang nur von dem Hydraulikzylinder 13 in die Brühkammer 10 zulässt. Dazu kann das Übergangsventil 14, wie anhand des Schaltbilds dargestellt, als Gegendruckventil ausgebildet sein. Bei Überschreitung eines Grenzdrucks im Hydraulikzylinder 13 öffnet das Übergangsventil 14 selbsttätig oder selbstständig und erlaubt einen Fluidfluss in Richtung der Brühkammer 10. Sobald der Innendruck im Hydraulikzylinder 13 den Grenzdruck unterschreitet, schließt das Übergangsventil 14. Das Übergangsventil 14 stellt bevorzugt einen unmittelbaren Übergang vom Hydraulikzylinder 13 zu der Brühkammer 10 dar.

Der Fluidpfad innerhalb der Brüheinheit 03 ist bis zum Übergangsventil 14 unverzweigt, so dass das Fluid fließt oder gefördert wird, ohne in Sacklöcher oder Totlöcher gefördert zu werden. Dies führt auch dazu, dass bei der Umkehr der Flussrichtung, zum Beispiel bei der Zurückförderung, alles oder fast alles an Fluid aus dem Fluidpfad entfernt oder entleert werden kann. Damit verbleibt nach der Zurückförderung kaum oder kein Restfluid in der Brüheinheit 03.

Je nach Betriebsprozess kann das in die Brühkammer 10 gelangte Fluid über den Brühkopf 15 in Richtung des Getränkeauslauf 07 gefördert werden, beispielsweise wenn es sich bei dem Betriebsprozess um einen Brühprozess handelt. Alternativ, beispielsweise im Rahmen eines Spülprozesses kann das in die Brühkammer 10 gelangte Fluid auch über einen nicht dargestellten Teil des Fluidsystems 04 in eine nicht dargestellte Tropfschale abgeleitet werden.

In einem weiteren Verfahrensschritt S4 kann zum Abschluss des Betriebsprozesses Fluid, welches das Übergangsventil 14 nicht passiert hat in den Fluidtank 02 oder zumindest in Richtung des Fluidtanks 02 zurückgefördert werden und Fluid, welches das Übergangsventil 14 passiert hat, kann an einer Förderung in Richtung Fluidtank 02 oder in den Fluidtank 02 gehindert werden. Dadurch wird Fluid konserviert und gegebenenfalls, wenn nämlich das Fluid im Hydraulikzylinder und im sonstigen Fluidsystem 04 vor dem Übergangsventil 14 zuvor eine Erwärmung erfahren hat, auch Wärme oder Wärmeenergie im System der Getränkezubereitungsvorrichtung 01, insbesondere im Fluidsystem zwischen Fluidtank 02 und Brüheinheit 03, konserviert werden.

Vorteilhaft kann bei der Rückführung des Fluids während des Verfahrensschritts S4 das Fluid, bevorzugt erneut und/oder in umgekehrter Richtung, die Heizeinrichtung 06 passieren und dabei Restwärme der Heizeinrichtung 06 aufnehmen und ebenfalls in Richtung des Fluidtanks 02 transportieren.

In einer ebenfalls bevorzugten Variante kann die elastische Rückstelleinrichtung 19, die beispielsweise als Wendelfeder oder Wendelfedern ausgebildet sein kann, die Rückführung des Fluids in den Fluidtank 02 verursachen. In diesem Fall könnte die Fluidpumpe 05 passiv bleiben. Alternativ könnte das Fluid auch auf einem nicht dargestellten, alternativen Teil des Fluidsystems 04 an der Fluidpumpe 05 vorbeigefördert werden.

Die Verbindungsstelle 17 und die Verbindungsstelle 18 sind trotz der Beweglichkeit der Brühkammer 10 innerhalb der Brüheinheit 03 besonders bevorzugt so ausgestaltet, dass die Verbindungsstellen 17, 18 nur gelöst werden, wenn die Brüheinheit 03 aus der Getränkezubereitungsvorrichtung 01 entnommen wird.

Die Heizeinrichtung 06 ist bevorzugt datentechnisch mit einer Steuereinheit 20 verbunden. Die Steuereinheit 20 kann vorteilhaft mit einer Speichereinheit 21 und/oder mit einer Sensoreinheit 22 datentechnisch verbunden sein. In der Speichereinheit 21 kann, bevorzugt zeitlich aufgelöst, eine Betriebsprozesshistorie gespeichert werden. Über die Sensoreinheit 22 kann beispielsweise der Füllstand des Fluids im Fluidtank 02 und/oder die Temperatur des Fluids im Fluidtank 02 gemessen werden. Abhängig von den Daten der Speichereinheit 21, insbesondere der Betriebsprozesshistorie und/oder abhängig von Messwerten der Sensoreinheit, insbesondere Füllstand und/oder Temperatur des Fluids im Fluidtank, kann bei der Überführung von Fluid aus dem Fluidtank 02 in die Brüheinheit 03 die Steuerung der Heizeinrichtung 06 angepasst, insbesondere die Leistung der Heizeinrichtung 06 gedrosselt werden. Damit kann dem Vorteil Rechnung getragen werden, dass bei der Rückführung des Fluids im Verfahrensschritt S4 auch Wärme im Fluidsystem 04 zwischen Fluidtank und Brüheinheit 03 durch Erwärmung des Fluids konserviert werden kann, sodass bei nachfolgenden Betriebsprozessen weniger Wärmeleistung oder Heizleistung der Heizeinrichtung 06 erforderlich ist.

Um dies zu ermöglichen, kann besonders vorteilhaft vorgesehen sein, dass bei der Rückführung des Fluids aus der Brüheinheit, insbesondere aus dem Hydraulikzylinder 13, das Fluid eine zu diesem Zeitpunkt deaktivierte Heizeinrichtung 06 passiert oder erneut passiert oder durchströmt.

### Bezugszeichen

- 01: Getränkezubereitungsvorrichtung
- 02: Fluidtank
- 03: Brüheinheit
- 04: Fluidsystem
- 05: Fluidpumpe
- 06: Heizeinrichtung
- 07: Getränkeauslauf
- 08: Getränkesubstratreservoir
- 09: Mahleinheit
- 10: Brühkammer
- 11: Brühkammerwand
- 12: Brühkammerboden
- 13: Hydraulikzylinder
- 14: Übergangsventil
- 15: Brühkopf
- 16: Gegendruckventil
- 17: Verbindungsstelle
- 18: Verbindungsstelle
- 19: Rückstelleinrichtung
- 20: Steuereinheit
- 21: Speichereinheit
- 22: Sensoreinheit

- S1: Verfahrensschritt
- S2: Verfahrensschritt
- S3: Verfahrensschritt
- S4: Verfahrensschritt

## Patentansprüche

1. Verfahren zum Betrieb einer Getränkezubereitungsvorrichtung (01), insbesondere eines Kaffee- und/oder Espressovollautomaten, mit einem Fluidtank (02), einem Fluidsystem (04), über welches Fluid aus dem Fluidtank (02) zumindest einer, bevorzugt entnehmbaren, Brüheinheit (03) der Getränkezubereitungsvorrichtung (01) zuführbar ist, wobei die Brüheinheit wenigstens einen Hydraulikzylinder (13) umfasst, der über das Fluidsystem (04) mit dem Fluidtank (02) verbunden ist umfassend die folgenden Verfahrensschritte:
- Aktivierung einer Fluidpumpe (05) zur Überführung von Fluid aus dem Fluidtank (02) über das Fluidsystem (04) in die Brüheinheit (03) zur Durchführung eines Betriebsprozesses, bevorzugt eines Brüh-, Spül- oder Reinigungsprozesses (S1);
- wenigstens teilweises Füllen des wenigstens einen Hydraulikzylinders (13) während des Betriebsprozesses mit Fluid (S2);
- Überführen von einem Teil des Fluids aus dem Hydraulikzylinder (13) in eine Brühkammer (10) der Brüheinheit (03) über ein Übergangsventil (14), bevorzugt unter gleichzeitiger Nachförderung von, besonders bevorzugt einem dem abfließenden Volumen gleichem Volumen, Fluid in den Hydraulikzylinder (13) durch die Fluidpumpe (05)(S3);
**dadurch gekennzeichnet,**
**dass** zum Abschluss des Betriebsprozesses Fluid, welches das Übergangsventil (14) nicht passiert hat, in den Fluidtank (02) zurück gefördert wird und jedweder Fluid, welches das Übergangsventil (14) passiert hat nicht in den Fluidtank (02) zurück gefördert wird (S4).

2. Verfahren nach Anspruch 1,
**dadurch gekennzeichnet,**
**dass** bei der Überführung von Fluid aus dem Fluidtank (02) über das Fluidsystem (04) in die Brüheinheit (03) das Fluid eine, bevorzugt aktivierte, Heizeinrichtung (06) der Getränkezubereitungsvorrichtung (01) durchströmt.

3. Verfahren nach Anspruch 1 oder 2,
**dadurch gekennzeichnet,**
**dass** bei der Rückförderung das Fluid, insbesondere nochmals und/oder in umgekehrter Richtung, durch die deaktivierte Heizeinrichtung (06) strömt, wobei Restwärme der deaktivierten Heizeinrichtung (06) auf das Fluid übertragen wird.

4. Verfahren nach einem der vorangehenden Ansprüche,
**dadurch gekennzeichnet,**
**dass** bei der Überführung von Fluid aus dem Fluidtank (02) über das Fluidsystem (04) in die Brüheinheit (03) das Fluid eine Heizeinrichtung (06) durchströmt, wobei die Steuerung der Heizeinrichtung (06) mittels einer Steuereinheit (20) der Getränkezubereitungsvorrichtung (01) auf der Basis einer gespeicherten Betriebsprozesshistorie angepasst wird.

5. Verfahren nach einem der vorangehenden Ansprüche,
**dadurch gekennzeichnet,**
**dass** bei der Überführung von Fluid aus dem Fluidtank (02) über das Fluidsystem (04) in die Brüheinheit (03) das Fluid eine Heizeinrichtung (06) durchströmt, wobei die Steuerung der Heizeinrichtung (06) mittels einer Steuereinheit (20) der Getränkezubereitungsvorrichtung (01) auf der Basis eines gemessenen oder approximierten Füllstands des Fluidtanks (02) angepasst wird.

6. Verfahren nach einem der vorangehenden Ansprüche,
**dadurch gekennzeichnet,**
**dass** Fluid welches das Übergangsventil (14) nicht passiert hat durch eine elastische Rückstelleinrichtung (19) des Hydraulikzylinders (13) aus dem Hydraulikzylinder (13) zurück in den Fluidtank (02) gefördert wird.

7. Verfahren nach einem der vorangehenden Ansprüche,
**dadurch gekennzeichnet,**
**dass** eine Verbindungsstelle (17, 18) des Fluidsystems (04) am Übergang zwischen der, bevorzugt entnehmbaren, Brüheinheit (03) und der restlichen Getränkezubereitungsvorrichtung (01) dauerhaft in einem Kopplungszustand verbleibt und lediglich in einen Trennungszustand überführt wird, in dem das Fluidsystem (04) zwischen Brüheinheit (03) und restlicher Getränkezubereitungsvorrichtung (01) unterbrochen ist, wenn die Brüheinheit (03) aus der Getränkezubereitungsvorrichtung (01) entnommen wird.

8. Verfahren nach einem der vorangehenden Ansprüche,
**dadurch gekennzeichnet, ,**
**dass** während der Betriebsprozesse eine Brühkammer (10) der Brüheinheit (03) mittels einer mechanischen Antriebseinheit in verschiedene Stellungen, wenigstens eine geöffnete Stellung und eine mit einem Brühkopf (15) dichtende Verschlussstellung, überführt wird.

9. Verfahren nach einem der vorangehenden Ansprüche,
**dadurch gekennzeichnet,**
**dass** das Fluid, welches in die Brüheinheit (03) überführt wird, in der Brüheinheit (03) in einem, bis zum Übergangsventil (14) unverzweigten Fluidpfad gefördert und/oder zurück gefördert wird.

10. Verfahren nach einem der vorangehenden Ansprüche,
**dadurch gekennzeichnet,**
**dass** Fluid, welches das Übergangsventil (14) passiert hat in einen Getränkeauslauf (07) und/oder in eine Tropfschale abgeleitet wird.
